# EUROPÄISCHE PATENTSCHRIFT

(11) **EP 2 072 963 B1**
(45) Veröffentlichungstag und Bekanntmachung des Hinweises auf die Patenterteilung: **13.06.2012**
(21) Anmeldenummer: 08105992.5
(22) Anmeldetag: 16.12.2008
(51) Int. Cl.: G01D 5/20

(54) **Sensor**
Sensor
Capteur

(30) Priorität: 21.12.2007 DE 102007062905
(43) Veröffentlichungstag der Anmeldung: 24.06.2009
(73) Patentinhaber: SICK AG, 79183 Waldkirch (DE)
(72) Erfinder: Machul, Olaf, 79104, Freiburg (DE)
(74) Vertreter: Ludewigt, Christoph

(56) Entgegenhaltungen:
- DE-A1- 10 013 525

## Beschreibung

Die Erfindung betrifft einen magnetischen Zylindersensor zur Erfassung einer Kolbenposition gemäß dem Oberbegriff des Anspruchs 1, sowie die Verwendung eines solchen Sensors.

Derartige Sensoren werden häufig an einem Gehäuse eines Arbeitszylinders angeordnet und haben sich zur genauen Positionsbestimmung durch berührungsloses Erfassen der Stellung von z. B. Pneumatik- oder Hydraulikkolben innerhalb des Arbeitszylinders bewährt. Ein derartiger Sensor ist beispielsweise aus der DE 10 2006 008 157 A1 bekannt. Dieser bekannte Sensor kann zwei bestimmte Kolbenpositionen erfassen. Einfachere Sensoren erfassen jeweils nur eine Kolbenposition.

Die elektrische Versorgung des Sensors sowie die Übertragung des Schaltsignals erfolgt über eine elektrische Leitung. Die Verlegung der Anschlussleitungen ist sehr material- und zeitaufwändig, da die Sensoren typischerweise in Industrierobotern eingesetzt werden und an einem einzigen Roboter bereits eine Vielzahl solcher Sensoren eingesetzt werden müssen. Kabelbäume mit 20 bis 30 Leitungen kommen häufig vor. Die Leitungen werden dann über Schleppketten an den beweglichen Teilen geführt. Leitungsbrüche sind die häufigste Ausfallursachen bei diesen Sensoren (ca. 80% der Ausfälle). Auch die Anbindung zwischen Sensorgehäuse und Anschlusskabel stellt im Bezug zur Dichtheit ebenfalls einen Schwachpunkt dar.

Es gibt von einigen Herstellern Pilotanlagen, in denen drahtlose Sensoren betrieben werden. So bietet ABB drahtlose Sensoren an, deren Energieversorgung über riesige Leiterschleifen induktiv eingekoppelt wird, wobei die Leiterschleifen die gesamte Roboterzelle umspannen. Derartige Leiterschleifen sind sehr platz-, montage- und kostenaufwändig und die eingestrahlte Energie ist sehr hoch. Weiter nachteilig werden innerhalb der Roboterzelle in Metallteilen Wirbelströme induziert. Außerdem ist die erreichbare Schaltfrequenz von ca. 2,5 Hz relativ gering.

Eine ähnliche Technologie ist aus der DE 10013525 A1 bekannt. Dieses Dokument beschreibt eine Vorrichtung zur drahtlosen Übertragung von Sensor-Positionssignalen, wobei ein magnetischer Positionssensor vorgesehen ist, der Schaltsignale, die Positionssignalen eines Zylinderkolbens entsprechen, drahtlos an eine Erfassungseinrichtung senden kann. Dazu weist der Sensor elektrische Speicherkondensatoren auf, die zur elektrischen Versorgung ausreichen, das Schaltsignal über eine HF-Antenne des Sensors zu senden. Die Speicherkondensatoren werden - wie dies von der RFID Technologie bekannt ist - über dieselbe Antenne drahtlos geladen. Dazu ist in dem Zylindergehäuse eine Hochfrequenzspule eingelassen.

Aus der US 6,628,741 ist ein Drehgeber bekannt mit einer Energieversorgungseinheit, die einen Reed-Schalter umfasst, der mittels eines an der Geberwelle montierten Dauermagneten betätigbar ist. Wird der Reed-Schalter bei Drehung der Geberwelle geschlossen, ändert sich der magnetische Fluss durch den Reed-Schalter, was von einer den Reed-Schalter umgebenden Spule erfasst wird, in der eine Spannung zur Energieversorgung erzeugt wird.

Davon ausgehend ist es Aufgabe der Erfindung einen verbesserten magnetischen Zylindersensor zur Erfassung einer Kolbenposition von außerhalb eines Arbeitszylinders bereitzustellen, der kabellos arbeiten kann und dabei einfach, kompakt und kostengünstig aufgebaut ist.

Diese Aufgabe wird gelöst durch einen Sensor mit den Merkmalen des Anspruchs 1.

Der erfindungsgemäße magnetische Zylindersensor zur Erfassung einer Kolbenposition entlang eines Hubwegs eines Kolbens eines Arbeitszylinders weist eine elektronische Auswerteeinheit auf, mit der die Kolbenposition magnetisch erfassbar ist und die ein die Kolbenposition repräsentierendes Signal abgeben kann. Zur Energieversorgung der Auswerteeinheit ist ein Energiegenerator vorgesehen, die Mittel aufweist zum Umwandeln der Bewegungsenergie, die sich bei Bewegung des Kolbens aus einer Relativbewegung zwischen dem Dauermagneten und dem Energiegenerator ergibt, in elektrische Energie und wobei das Signal drahtlos von dem Sensor an eine übergeordnete Steuerung oder an andere Sensoren übertragbar ist.

Zwar ist die Verwendung einer Energieversorgungseinheit zum autarken Betrieb grundsätzlich aus der US 6,628,741 für Drehgeber bekannt, aber für Kolbenpositionserfassungssensoren, sogenannte Zylindersensoren, wurde dies bislang nie in Betracht gezogen, wohl auch unter anderem deswegen, weil die Größe, also der Bauraum, von Zylindersensoren eine ausschlagebende Bedeutung hat. In der Regel werden die Zylindersensoren in Befestigungsnuten am Arbeitszylinder eingesetzt (siehe auch DE 196 43 413 A1 oder DE 196 53 222 A1). Der erfindungsgemäße Sensor hingegen kann sehr kompakt, klein und kostengünstig ausgeführt werden.

Aufgrund der sensoreigenen, autarken Energieversorgung ist für den Betrieb des Sensors weder eine Batterie noch eine Anschlussleitung notwendig. Das reduziert nicht nur den Montage- und Installationsaufwand erheblich, sondern es sind weder Schleppketten noch Kabelkanäle erforderlich. Durch den somit möglichen Verzicht auf sämtliche Kabel für den erfindungsgemäßen Sensor wird die Verfügbarkeit der Anlage, in der die Sensoren eingesetzt werden, erheblich erhöht und Stillstandszeiten der Anlage reduziert, da ein Ausfall durch Leitungsbrüche nicht mehr auftreten kann. Daneben sind neue Anwendungen mit frei bewegbaren, also ungebundenen Magnetsensoren möglich.

Des Weiteren ist eine völlige Kapselung des Sensors möglich, was insbesondere in Anlagen für die Lebensmittelindustrie, bei der aggressive Reinigungsmittel eingesetzt werden oder auch in Anwendungen mit Explosionsschutzbedingungen, vorteilhaft ist.

Der Energiegenerator weist eine Spule auf, sowie Mittel zur schlagartigen Änderung des magnetischen Flusses in der Spule. Bei einer derartigen schlagartigen Änderung des magnetischen Flusses ist die durch die Flussänderung dΦ/dt in der Spule induzierter Spannung U weitgehend unabhängig von der Geschwindigkeit des Kolbens, was den Einsatzbereich der erfindungsgemäßen Sensoren erheblich erhöht.

Einen weiteren Vorteil stellt der mit der Kabelfreiheit einhergehende einfache Austausch von Sensoren dar.

Vorteilhafte Ausgestaltungen sind Gegenstand der abhängigen Ansprüche.

In einer ersten Ausführungsform wird die Relativbewegung dadurch erreicht, dass ein Dauermagnet am Arbeitszylinder fixiert ist und der Energiegenerator an dem beweglichen Kolben angeordnet ist.

Bevorzugt ist alternativ der Energiegenerator ortsfest am Arbeitszylinder fixiert und der Dauermagnet an dem beweglichen Kolben angeordnet.

Das Mittel zur schlagartigen Änderung des magnetischen Flusses ist bevorzugt ein von der Spule umschlossener Magnetkreis, der bei Bewegung des Kolbens schlagartig schließbar ist und/oder geöffnet werden kann.

Zur Erhöhung des magnetischen Flusses ist der Magnetkreis gebildet durch einen weichmagnetischen Spulenkern, dessen beiden Enden mittels der magnetischen Kraft des sich gegenüber dem Spulenkern bewegenden Dauermagneten gegen eine Federkraft schlagartig miteinander verbindbar sind.

Sensor nach einem der vorhergehenden Ansprüche, dadurch gekennzeichnet, dass die Spule als Printspule auf einer mehrschichtigen Leiterplatte ausgebildet ist und der Spulenkern zwischen zwei Lagen der Leiterplatte vorgesehen ist.

In einer alternativen Ausführungsform können die Mittel zur schlagartigen Änderung des magnetischen Flusses einen weichmagnetischen Kern umfassen, der mit einer Schicht aus hartmagnetischem Material umhüllt ist.

In Weiterbildung der Erfindung kann die Spule aus einem weichmagnetischen Material bestehen, das von einer hartmagnetischen Schicht umhüllt ist.

Der Sensor kann sehr kostengünstig hergestellt werden und eine kompaktere Bauform erhalten, wenn die Spule als Printspule auf einer mehrschichtigen Leiterplatte ausgebildet ist und der mögliche Spulenkern zwischen zwei Lagen der Leiterplatte vorgesehen ist. Der Sensor könnte auch beispielsweise in Mikrosystemtechnik hergestellt sein.

Vorteilhafterweise ist eine Energiespeichereinheit vorgesehen zur Zwischenspeicherung der von dem Energiegenerator erzeugten Energie. Damit steht zu Zeitpunkten Energie zur Verfügung, in denen der Energiegenerator selbst keine Energie erzeugt, so dass einzelne Energie- bzw. Spannungsimpulse zwischengespeichert werden können, um einen kontinuierlichen Betrieb der Auswerteeinheit über einen zum Erzeugen und/oder Senden der Signale notwendigen Zeitraum zu gewährleisten.

In Weiterbildung der Erfindung kann die Wirkung des Dauermagneten auf den Energiegenerator auch als Auslöser für das Positionssignal genutzt werden. Die Wirkung kann dabei die Spannungsinduktion in der Spule des Energiegenerators oder auch ein Öffnen und/oder Schließen des Magnetkreises sein.

Wenn der Sensor ein hermetisch dichtes Gehäuse aufweist, ist er mit besonderem Vorteil in Arbeitsbereichen einsetzbar, in denen aggressive oder gefährliche Medien zur Anwendung gelangen, beispielsweise im Lebensmittelbereich, wo zu Reinigungszwecken aggressive Reinigungsmittel verwendet werden oder in Applikationen, in denen explosive Medien eingesetzt werden. Hohe IP-Schutzklassen sind damit realisierbar.

Mit besonderem Vorteil ist der erfindungsgemäße Sensor zur Kolbenlagenbestimmung an einem Pneumatik- oder Hydraulikzylinder einsetzbar. Dabei könnte der Sensor vollständig, mit Ausnahme einer Antenne, in den Pneumatik- oder Hydraulikzylinder integriert sein, da er kabellos arbeitet und keinerlei Energieversorgung benötigt. Dadurch ist die Handhabung und Reinigung eines solchen Zylinders erheblich erleichtert.

Der Energiegenerator kann vorteilhafterweise in Mikrosystemtechnik herstellbar sein.

Im Folgenden wird die Erfindung anhand von Ausführungsbeispielen unter Bezugnahme auf die Zeichnung im Einzelnen erläutert. In der Zeichnung zeigen:
- Fig. 1 und 2: schematische Darstellungen zweier Ausführungsbeispiele des erfindungsgemäßen Sensors an einem Arbeitszylinder;
- Fig. 3 und 4: schematische Darstellungen eines Teils von zwei Ausführungsformen des Energiegenerators.

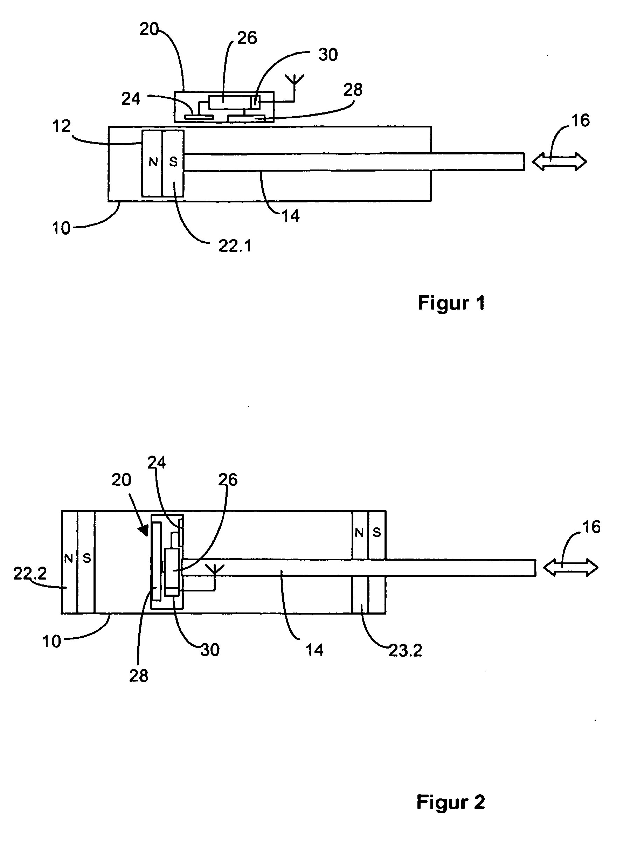

Ein in den Fig. 1 und 2 dargestellter Arbeitszylinder 10, der ein Pneumatikzylinder eines nicht dargestellten Industrieroboters sein kann, enthält einen Kolben 12, der mittels einer Kolbenstange 14 in dem Arbeitszylinder 10 in Längsrichtung des Zylinders (Pfeil 16) innerhalb seiner beiden Endstellungen bewegbar ist. Die Kolbenposition ist mittels eines magnetischen Zylindersensor 20, im Folgenden nur Sensor genannt, ermittelbar.

Der Sensor 20 ist in der Zeichnung (Fig. 1 und 2) nur schematisch dargestellt und enthält wenigstens ein magnetisches Sensorelement 24, das auf das Magnetfeld eines Dauermagneten 22.1 bzw. 22.2 und 23.2 reagiert, eine Auswerteeinheit 26, die bevorzugt in einem Mikrocontroller realisiert ist und in der die Signale des Sensorelementes 24 weiterverarbeitet werden, sowie gegebenenfalls notwendige Speicher.

In Fig. 1 ist der Dauermagnet 22.1 an der Kolbenstange 14 befestigt, und der Sensor 20 ist an dem Arbeitszylinder 10 außen derart positioniert, dass er die gewünschte Kolbenposition über das Sensorelement 24 erfassen kann. Der Sensor könnte auch der Art ausgebildet sein, um elektronisch auf bestimmte Kolbenpositionen eingestellt werden zu können. Häufig müssen nur die Kolbenendpositionen erfasst werden.

In Fig. 2 sind an den Enden des Arbeitszylinders 10 je ein Dauermagneten 22.2 und 23.2 stationär angeordnet und der Sensor 20 ist an der Kolbenstange 14 befestigt. die prinzipielle Funktionsweise ist aber derjenige Ausführungsform nach Fig. 1 ähnlich, das heißt die Kolbenposition wird über den Sensor 20 erfasst, indem der Sensor 20 die Lage im Magnetfeld zwischen den beiden Dauermagneten 22.2 und 23.2 erkennt.

Weiter weist der Sensor 20 einen Energiegenerator 28 auf, der dazu geeignet ist, den Sensor 20 mit elektrischer Energie zu versorgen und der weiter unten näher erläutert wird.

Des Weiteren weist der Sensor 20 eine Übertragungseinheit 30 auf, mittels derer Signale des Sensors 20, die unter anderem die Kolbenposition anzeigen, an eine übergeordnete Steuerung drahtlos übertragbar sind und über die der Sensor 20 gegebenenfalls Parameterdaten oder sonstige Einstellungen drahtlos erhalten kann.

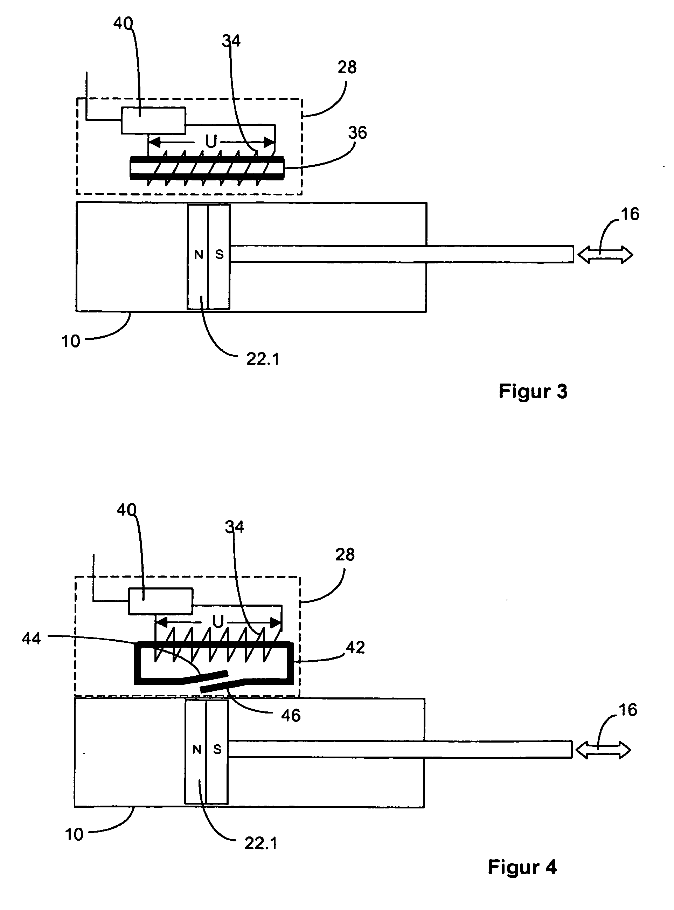

In Fig. 3 und 4 sind neben dem Arbeitszylinder 10 die wesentlichen Elemente von zwei Ausführungsformen des Energiegenerators 28 schematisch dargestellt. Beide Ausführungsformen der Energiegenerator 28 sind selbstverständlich auf beide Ausführungsformen der Anordnungen nach Fig. 1 und 2 anwendbar.

Im ersteren Ausführungsbeispiel (Fig. 3) weist der Energiegenerator 28 eine Spule 34 auf, in derem Inneren ein Spulenkern 36 angeordnet ist, der aus einem weichmagnetischen Material besteht, dass von einer hartmagnetischen Schicht umhüllt ist.

Bei Vorbeiführen des Kolbens 12 (Pfeil 16) wird der Kolbenmagnet 22.1 an der Spule 34 mit ihrem Spulenkern 36 vorbeigeführt. Aufgrund der magnetischen Kopplung kommt es in dem Spulenkern 36 aus weich- und hartmagnetischem Material bei einer gewissen Position des Kolbenmagneten 22.1 zu einer schlagartigen Ummagnetisierung und damit zu einer schlagartigen Änderung des magnetischen Flusses Φ, so dass eine der zeitlichen Flussänderung dΦ/dt entsprechende Induktion einer Spannung U in der Spule 34 erfolgt.

Diese Spannung U wird einer Energieversorgungselektronik 40 zugeführt und dort entsprechend verarbeitet, um letztendlich den Sensor 20 mit elektrischer Energie versorgen zu können. Die Energieversorgungselektronik 40 kann einen Energiespeicher, beispielsweise einen Stützkondensator oder Akkumulator, aufweisen, um die erzeugte Energie, die nur über kurze Zeiträume erzeugt wird (beim Vorbeiführen des Kolbenmagneten), auch zu Zeitpunkten, an denen die Flussänderungen abgeklungen ist, zur Verfügung stehen zu haben, beispielsweise um das Kolbenpositionssignal oder andere Daten zu senden oder zu empfangen.

In der zweiten Ausführungsform ist der Energiegenerator 28 sehr ähnlich aufgebaut und weist wie in der ersten Ausführungsform eine Spule 34 zur Induktion einer Spannung U sowie eine Energieversorgungselektronik 40 auf. Im Unterschied zum ersten Ausführungsbeispiel ist jetzt ein von der Spule 34 umschlossener offener Magnetkreis 42 vorgesehen, dessen Enden 44 und 46 bei Vorbeiführen des Kolbenmagneten 22.1 bei einer bestimmten Position des Kolbenmagneten schlagartig geschlossen werden gegen eine Federkraft der Enden 44 und 46. Nach genügender Entfernung des Kolbenmagneten aus dieser bestimmten Position bewirkt die Federkraft wieder eine schlagartige Öffnung des Magnetkreis 42.

Durch das Öffnen und insbesondere durch das Schließen des Magnetkreises 42 erfolgt jeweils eine schlagartige Flussänderung in der Spule 34 und wie zum ersten Ausführungsbeispiel bereits beschrieben, eine entsprechende Induktion einer Spannung U, unabhängig von der Kolbengeschwindigkeit.

Weiter könnte die Spule als Printspule auf einer mehrschichtigen Leiterplatte ausgebildet sein. Der Spulenkern bzw. der Magnetkreis ist dann als Zwischenschicht zwischen zwei Lagen der Leiterplatte vorgesehen. Eine derartige Ausbildung der Spule mit Spulenkern kann kostengünstig hergestellt werden und als sehr kompakte Einheit Bauraum sparen.

Da es in vielen Anwendungen häufig vorkommt, dass nur eine Kolbenposition zu erfassen oder nur eine Vorbeibewegung des Kolbens an dem Sensor zu detektieren ist, kann in einer Ausgestaltung der Erfindung das Kolbenpositionssignal ausgelöst werden, wenn der Energiegenerator aktiv geworden ist, wenn also eine Spannung in der Spule 34 durch den Dauermagneten 22.1 induziert wurde. In einem solchen Fall könnte das Sensorelement 24 entfallen und der Sensor 20 insgesamt noch kostengünstiger ausgestaltet werden. Allerdings wäre es dann notwendig, den Sensor 20 korrekt an dem Arbeitszylinder zu positionieren, damit ein Schaltsignal bei der gewünschten Kolbenpositionen auftritt.

Da der erfindungsgemäße Sensor 20 vollständig kabellos arbeitet, kann ein Gehäuse des Sensors hermetisch dicht ausgestaltet werden: Er könnte sogar vollständig, mit Ausnahme einer Antenne, in einen Pneumatik- oder Hydraulikzylinder integriert werden.

## Patentansprüche

1. Magnetischer Zylindersensor (20) zur Erfassung einer Kolbenposition entlang eines Hubwegs eines Kolbens (12) eines Arbeitszylinders (10), mit einer elektronischen Auswerteeinheit (26), mit der die Kolbenposition magnetisch erfassbar ist und die ein die Kolbenposition repräsentierendes Signal abgeben kann, das drahtlos von dem Sensor an eine übergeordnete Steuerung oder an andere Sensoren übertragbar ist,
**dadurch gekennzeichnet,**
**dass** zur Energieversorgung der Auswerteeinheit (26) ein Energiegenerator (28) in dem Sensor (20) vorgesehen ist,
**dass** der Energiegenerator (28) Mittel aufweist zum Umwandeln der Bewegungsenergie, die sich bei Bewegung des Kolbens (12) aus einer Relativbewegung zwischen einem Dauermagneten (22.1) und dem Energiegenerator (28) ergibt, in elektrische Energie und diese Mittel eine Spule (34) sowie Mittel (42, 44, 46) zur schlagartigen Änderung des magnetischen Flusses in der Spule (34) umfassen.

2. Sensor nach Anspruch 1, **dadurch gekennzeichnet, dass** der Dauermagnet ortsfest am Arbeitszylinder fixiert ist und der Energiegenerator an dem beweglichen Kolben angeordnet ist.

3. Sensor nach Anspruch 1, **dadurch gekennzeichnet, dass** der Energiegenerator ortsfest am Arbeitszylinder fixiert ist und der Dauermagnet an dem beweglichen Kolben angeordnet ist.

4. Sensor nach einem der vorhergehenden Ansprüche, **dadurch gekennzeichnet, dass** die Mittel zur schlagartigen Änderung des Flusses einen von der Spule umschlossenen Magnetkreis umfassen, der bei Bewegung des Kolbens schlagartig schließbar ist und/oder geöffnet werden kann.

5. Sensor nach Anspruch 4, **dadurch gekennzeichnet, dass** der Magnetkreis gebildet ist durch einen weichmagnetischen Spulenkern, dessen beiden Enden mittels der magnetischen Kraft des sich gegenüber dem Spulenkern bewegenden Dauermagneten gegen eine Federkraft schlagartig miteinander verbindbar sind.

6. Sensor nach einem der vorhergehenden Ansprüche, **dadurch gekennzeichnet, dass** die Spule als Printspule auf einer mehrschichtigen Leiterplatte ausgebildet ist und der Spulenkern zwischen zwei Lagen der Leiterplatte vorgesehen ist.

7. Sensor nach einem der vorhergehenden Ansprüche 1 bis 3, **dadurch gekennzeichnet, dass** die Mittel zur schlagartigen Änderung des Flusses einen weichmagnetischen Kern umfassen, der mit einer Schicht aus hartmagnetischem Material umhüllt ist.

8. Sensor nach einem der vorhergehenden Ansprüche, **dadurch gekennzeichnet, dass** die Spule aus einem weichmagnetischen Material besteht, das von einer hartmagnetischen Schicht umhüllt ist.

9. Sensor nach einem der vorhergehenden Ansprüche, **dadurch gekennzeichnet, dass** eine Energiespeichereinheit vorgesehen ist zur Zwischenspeicherung der von dem Energiegenerator erzeugten Energie.

10. Sensor nach einem der vorhergehenden Ansprüche, **dadurch gekennzeichnet, dass** die Wirkung des Dauermagneten auf den Energiegenerator als Auslöser für das Signal genutzt wird.

11. Sensor nach einem der vorhergehenden Ansprüche, **gekennzeichnet durch** ein hermtisch dichtes Gehäuse.

12. Verwendung eines Sensors nach einem der vorhergehenden Ansprüche zur Integration in einen Pneumatik- oder Hydraulikzylinder.

## Claims

1. Magnetic cylinder sensor (20) for detecting a position of a piston along a path of the piston (12) of a working cylinder (10), with an electronic evaluation unit (26), with which the position of the piston is magnetically detectable and which can deliver a signal representing the position of the piston, which signal can be transmitted wirelessly from the sensor to a master controller or other sensors, **characterized in that** an energy generator (28) is provided in the sensor (20) as power supply for the evaluation unit (26) and **in that** the energy generator (28) comprises means for converting the kinetic energy, which results from a relative movement between a permanent magnet (22.1) and the energy generator (28) while the piston (12) is moving, into electric energy and these means comprise a coil (34) as well as means (42, 44, 46) for an abrupt change in magnetic flux in the coil (34).

2. Sensor according to claim 1, **characterized in that** the permanent magnet is fixed on the working cylinder and the energy generator is arranged at the moveable piston.

3. Sensor according to claim 1, **characterized in that** the energy generator is fixed to the stationary cylinder and the permanent magnet is arranged at the moveable piston.

4. Sensor according to any one of the preceding claims, **characterized in that** the means for an abrupt change of the flux comprise a magnetic circuit enclosed by the coil which circuit is abruptly closeable and/or openable by movement of the piston.

5. Sensor according to claim 4, **characterized in that** the magnetic circuit is formed by a magnetically soft core of the coil, which two ends are abruptly connectable against an elastic force and by means of the magnetic force of the permanent magnet moving relative to the core of the coil.

6. Sensor according to any one of the preceding claims, **characterized in that** the coil is formed as a printed coil on a multilayer circuit board and the core of the coil is provided between two layers of the circuit board.

7. Sensor according to one of claim 1 to 3, **characterized in that** the means for the abrupt change of the flux comprise a magnetically soft core which is coated with a layer of magnetically hard material.

8. Sensor according to any one of the preceding claims, **characterized in that** the coil is made of a magnetically soft material that is encased in a magnetically hard layer.

9. Sensor according to any one of the preceding claims, **characterized in that** an energy storage unit is provided for intermediate storage of the energy produced by the energy generator.

10. Sensor according to any one of the preceding claims, **characterized in that** the effect of the permanent magnet on the energy generator is used as a trigger for the signal.

11. Sensor according to any one of the preceding claims, **characterized by** a hermetically sealed housing.

12. Use of a sensor according to any one of the preceding claims for integration into a pneumatic or hydraulic cylinder.

## Revendications

1. Capteur magnétique du cylindre (20) pour détecter une position d'un piston le long d'une course du piston (12) d'un cylindre (10), avec une unité d'évaluation électronique (26), avec laquelle la position du piston est magnétiquement détectable et qui peut délivrer un signal représentant la position du piston, ce signal peut être transmis sans fil à partir du capteur à une commande maître ou d'autres capteurs, **caractérisé en ce qu'**un générateur d'énergie (28) est fourni dans le capteur (20) pour fourniture d'énergie de l'unité d'évaluation (26) et **en ce que** le générateur d'énergie (28) comprend des moyens pour convertir l'énergie cinétique, qui résulte d'un mouvement relatif entre un aimant permanent (22.1) et le générateur d'énergie (28) tandis que le piston (12) est en mouvement, en énergie électrique et ces moyens comprennent une bobine (34) ainsi que les moyens (42, 44, 46) pour un changement brusque de flux magnétique dans la bobine (34).

2. Capteur selon la revendication 1, **caractérisé en ce que** l'aimant permanent est fixé sur le cylindre et le générateur d'énergie est disposé au piston mobile.

3. Capteur selon la revendication 1, **caractérisé en ce que** le générateur d'énergie est fixé au cylindre fixe et l'aimant permanent est disposé au piston mobile.

4. Capteur selon l'une quelconque des revendications précédentes, **caractérisé en ce que** les moyens d'un changement brusque du flux comportent un circuit magnétique enserré par la bobine, le circuit magnétique est fermé brusquement et/ou peut être ouvert brusquement par le mouvement du piston.

5. Capteur selon la revendication 4, **caractérisé en ce que** le circuit magnétique est constitué par un noyau de bobine en magnétique doux, dont les deux extrémités sont brusquement connectables par la force magnétique de l'aimant permanent mobile par rapport au noyau de bobine contre une force élastique.

6. Capteur selon l'une quelconque des revendications précédentes, **caractérisé en ce que** la bobine est formée comme une bobine imprimée sur un circuit imprimé et le noyau de bobine est prévu entre deux couches du circuit imprimé.

7. Capteur selon l'une des revendication 1 à 3, **caractérisé en ce que** les moyens pour le changement brusque du flux comprennent un noyau magnétique doux qui est recouvert d'une couche de matériau magnétique dur.

8. Capteur selon l'une quelconque des revendications précédentes, **caractérisé en ce que** la bobine existe d'un matériau magnétique doux qui est enfermé dans une couche magnétique dur.

9. Capteur selon l'une quelconque des revendications précédentes, **caractérisé en ce qu'**une unité de stockage de l'énergie est fournie pour le stockage intermédiaire de l'énergie produit par le générateur d'énergie.

10. Capteur selon l'une quelconque des revendications précédentes, **caractérisé en ce que** l'effet de l'aimant permanent sur le générateur d'énergie est utilisé comme un déclencheur pour le signal.

11. Capteur selon l'une quelconque des revendications précédentes, **caractérisé par** un boîtier hermétiquement scellé.

12. Utilisation d'un capteur selon l'une quelconque des revendications précédentes pour l'intégration dans un cylindre pneumatique ou un vérin hydraulique.
